Europäisches Patentamt

European Patent Office

Office européen des brevets

(11) Veröffentlichungsnummer: **0 065 557
B1**

# (12) EUROPÄISCHE PATENTSCHRIFT

(45) Veröffentlichungstag der Patentschrift:
19.03.86

(21) Anmeldenummer: 82900017.3

(22) Anmeldetag: 03.12.81

(86) Internationale Anmeldenummer:
PCT/DE 81/00213

(87) Internationale Veröffentlichungsnummer:
WO 82/02097 (24.06.82 Gazette 82/16)

(51) Int. Cl.⁴: **G 01 V 5/02**, G 01 T 1/169,
A 61 N 1/16

(54) **VORRICHTUNG ZUR MESSUNG DES RADIOAKTIVEN STRAHLUNGSPROFILS AUF DER ERDOBERFLÄCHE UND MITTEL ZUR HOMOGENISIERUNG DER ERMITTELTEN STRAHLUNGSINTENSITÄT.**

(30) Priorität: 03.12.80 DE 3045578

(43) Veröffentlichungstag der Anmeldung:
01.12.82 Patentblatt 82/48

(45) Bekanntmachung des Hinweises auf die Patenterteilung:
19.03.86 Patentblatt 86/12

(84) Benannte Vertragsstaaten:
AT CH DE FR GB LI LU NL SE

(56) Entgegenhaltungen:
DE - A - 3 003 958
GB - A - 722 015
US - A - 2 562 962
US - A - 2 562 968
US - A - 3 428 808
US - A - 3 812 363

Health Physics, volume 41, No 6, published in December
1981, Vermont (US) T.E. Myrick u.a.: "A mobile
laboratory system for use in ground-level gammaray
scanning", pages 864-865

(73) Patentinhaber: Klein, Gerald, Hohe Ähren 10b,
D-1000 Berlin 33 (DE)

(72) Erfinder: Klein, Gerald, Hohe Ähren 10b,
D-1000 Berlin 33 (DE)

(74) Vertreter: Lauw, Rudolf C. W., Karwinskistrasse 1,
D-8000 München 60 (DE)

## Beschreibung

Die Erfindung bezieht sich auf eine Vorrichtung zur Messung von vom Erdboden abstrahlender radioaktiver Strahlunq zur Ermittlung des/der dort vorhandenen Strahlungsintensitätsgradienten. Die Erfindung bezieht sich auch auf ein Verfahren zur Nivellierung des/der durch diese Vorrichtung ermittelten Strahlungsintensitätsgradierten.

Bekannte Vorrichtungen dieser Art sind beispielsweise ein sogenannter Geigerzähler oder ein Szintillationsspektrometer, die zur Ermittlung der Strahlungsintensität an einer Geländestelle jeweils nur als eine Einheit zum Einsatz kommen. In der US-PS 2.562.968 ist beispielsweise ein System zur Messung der Intensität der an einer bestimmten Meßstelle von der Erdoberfläche abgestrahlten Gamma-Strahlen zum Zwecke der Prospektion von Bodenschätzen beschrieben. Zur Erhöhung der Meßgenauigkeit an dieser einen Meßstelle werden zwei nahe aneinander angeordnete Meßgeräte eingesetzt, wobei ein Meß-gerät gegen die Erdstrahlung abgeschirmt ist, während das andere Meßgerät die kosmische Strahlung und die Erdstrahlung mißt. Durch Differenzbildung der von beiden Meßgeräten gelieferten Meßergebnisse kann die kosmische Strahlung eliminiert und dadurch die Genauigkeit des Meßwertes der an der Meßstelle vorhandenen Erdstrahlung erhöht werden.

Die vorstehend erwähnten Systeme sind nicht geeignet, die für die Durchführung eines in der DE-OS 30 03 958 beschriebenen Verfahrens zur Homogenisierung bzw. Nivellierung der in einem bestimmten Gelände oder Gebäude vom Erdboden abstrahlenden radioaktiven Strahlung erforderlichen Daten zu liefern. Hierfür wäre eine Art Strahlungsintensitätsprofil über dem zu homogenisierenden bzw. zu nivellierenden Gelände zu erstellen, das die Bereiche des normalen Niveaus sowie höherer Strahlungswerte (Strahlungsberge) und besonders die Bereiche niedriger Strahlungswerte (Strahlungssenken) anzeigt.

Mit den vorstehend erwähnten bekannten Systemen, insbesondere mit dem in der US-PS 2.562.968 beschriebenen System, ist es nicht möglich, zu einem gegebenen Zeitpunkt das in einem Gelände oder Gebäude vorhandene Erdstrahlungs-Profil zu ermitteln, weil es aus den vorstehend angegebenen Gründen trotz Einsatzes zweier Meßgeräte nur eine Ein-Punkt-Messung über einer einzigen Meßstelle der Erdoberfläche gestattet.

Es ist daher Aufgabe der Erfindung, eine Vorrichtung anzugeben, womit von einer in einem bestimmten Gelände oder Gebäude vorhandenen bzw. herrschenden radioaktiven Erdstrahlung ein entsprechendes Intensitätsprofil, das heißt die Bereiche hoher Strahlung und die bereiche niedriger Strahlung, ähnlich einer geographischen Reliefkarte, ermittelbar ist.

Diese Aufgabe wird gemäß der Erfindung erreicht durch mindestens zwei nebeneinander in Abstand voneinander und über dem zu messenden Erdboden etwa in gleicher Höhe angeordnete und an eine Recheneinheit angeschlossene Detektoren, die über die Recheneinheit derart miteinander kombiniert sind, daß eine von der Recheneinheit gesteuerte Anzeigeeinrichtung jeweils die Differenz bzw. den Unterschied der Strahlungsintensitäten der Bereiche zwischen den Meß-stellen anzeigt, über denen sich die Detektoren gerade befinden.

Weitere Ausgestaltungen ergeben sich aus den Unteransprüchen 2 bis 11. Die Differenzbildung kann auch von Hand ohne Recheneinheit vorgenommen werden.

Mittels einer längs der Koordinaten eines parallel zu der zu vermessenden Ebene liegenden Koordinatensystems schrittweise fortschreitenden oder punktuell durchgeführten Vermessung des Geländes oder Gebäudes mit dem erfindungsgemäßen System läßt sich ein mehr oder weniger präzises Strahlungsintensitätsprofil dieses Geländes oder Gebäudes oder einzelner Räume ermitteln. Dieses kann als Grundlage für das Verfahren dienen, das, wie eingangs bereits erwähnt, Gegenstand der DE-OS 30 03 958 ist.

Mit dem vorstehend beschriebenen System können die örtlichen Meßwerte jedoch nur nach Ablaug einer bestimmten Zeitspanne ermittelt werden. Die hierfür durchschnittlich erforderlichen Zeiten liegen etwa in einer Größenordnung mindestens mehrerer Minuten. Die Vermessung von Reizzonen, Reizstreifen oder Kreuzungen hat gezeigt, daß in einem Flächenbereich von etwa 50 x 50 cm Swankungen der radioaktiven Strahlungs-Intensität festgestellt werden können. Bei Zugrundelegung einer Mindestmeßzeit von beispielsweise 5 Minuten für einen einzigen Meßpunkt würde die Vermessung einer Fläche von 50 x 50 cm mit einem Meßpunktabstand von jeweils 5 cm insgesamt 100 Meßpunkte und damit einen Zeitaufwand von insgesamt 500 Minuten, das heißt von mehr als 8 Stunden erfordern.

Außerdem ist es auch Aufgabe der Erfindung, mit möglichst einfachen Mitteln die durch entsprechende Meßgeräte ermittelten sogenannten "Strahlungssenken" so zu nivellieren, daß sich im Bereich dieser "Strahlungssenken" im Vergleich zu deren Umfeld eine Art Gleichgewichtszustand ergibt, und dadurch Strahlungsgradienten, wie sie zwischen einem höheren und einem tieferen strahlungsniveau bestehen, beseitigt werden.

Diese Aufgabe wird erfindungsgemäß durch das im Anspruch 12 gekennzeichnete Verfahren zur Nivellierung von radioaktiver Strahlungsintensität gelöst. Vorteilhafte Weiterbildungen erqeben sich aus den Unteransprüchen 13 bis 15.

Das Verfahren nach DE-OS 30 03 958 sieht eine Nivellierung der örtlichen Strahlungsintensität auf Grundstücken, in Häusern und Wohnungen durch zusätzliches Anbringen von radioaktivem Material über Strahlungssenken vor. Dies kann bei Grundstücken vor dem Bau eines Hauses durch Einbringen und Verteilen von jeeignetem radioaktivem Material, z.B. Sand, Schotter od. dgl. auf den Strahlungssenken erreicht werden.

Bei schon bestehenden Gebäuden kann die Nivellierung durch Unterlegen von genau definiertem radioaktivem Material zur exakten Beseitigung der Strahlungsgradienten unter bestimmten Plätzen, beispielsweise unter Betten, Arbeitsplätzen oder sonstigen Aufenthaltsplätzen von Menschen oder unter Stallungen jeder Art für Tiere erreicht werden.

Da dieses Unterlegen von Menschen vorgenommen wird, muß das verwendete radioaktive Material so verpackt sein, daß eine direkte Berührung oder ein Abrieb des radioaktiven Materials nicht möglich ist. Diese Forderung wird, wie vorstehend erläutert, durch den Gegenstand der Erfindung erfüllt.

Weitere Merkmale, Einzelheiten und Vorteile ergeben sich aus nachfolgender Beschreibung einer bevorzugten Ausführungsform der Erfindung sowie aus der in der Anlage beigefügten Zeichnung. Hierbei zeigt:

Fig. 1 ein über einem zu vermessenden Gelände angeordnetes Meßgerät mit zwei Detektoren und

Fig. 2 eine rasterartige Anordnung von beispielsweise 25 Detektoren in schematischer Darstellung.

Über dem Erdboden 1 herrsche ein Strahlungsintensitatsprofil, das duich zwei "neutrale" Bereiche 6 etwa gleichmäßig überdem Erdboden 1 verteilter Strahlungsintensität 6' (Strahlungsberge) gekennzeichnet ist zwischen denen sich eine (z.B. durch eine unter dem Erdboden 1 verlaufende Wasserader 11 verursachte) "Reizzone" befindet, deren Bereich 7 gegenüber den Bereichen 6 eine verminderte Strahlungsintensität 7' (Strahlungssenke) aufweist. Dieser physikalisch existente Sachverhalt über der Erdbodenfläche 1 (im Gelände oder in einem Gebäude) läßt sich nun mit Hilfe einer Meßvorrichtung 12 gemaß der Erfindung verhältnismäßig einfach und exakt feststellen. Die Meßvorrichtung 12 weist zwei in veränderlichem Abstand A voneinander angeordnete Detektoren 2,3 auf, die während der Durchführung der Vermessung des Erdbodens 1 jeweils mit etwa gleichgroßem Abstand H über dem letzteren sowie nebeneinander angeordnet sind.

Die beiden Detektoren 2,3 der Meßvorrichtung 12 sind in dieser Ausführungsform an eine einzige zentrale Empfangseinrichtung 10 angeschlossen die in einem geeigneten Takt abwechselnd auf den einen oder den anderen Detektor 2,3 schaltbar ist. Sie können aber auch jeweils an separate Empfangseinrichtungen angeschlossen werden.

Die zentralen Empfangseinrichtungen 10 können wiederum an einen Computer 4 angeschlossen werden, der die von den beiden Detektoren 2,3 ermittelten Strahlungsintensitätswerte 6', 7', einem entsprechenden Rechenprogramm folgend, aufbereitet und in geeigneter Weise einer Digital- oder Analog-Anweigeeinrichtung 5 zuführt und somit dem menschlichen Bewußtsein zugänglich macht. Diese Werte können auch mittels eines (hier nicht dargestellten) Druckers ausgedruckt oder mit Hilfe einer (hier ebenfalls nicht bildlich gezeigten) automatischen Zeicheneinrichtung in Form einer fortlaufenden Kurve dargestellt werden.

Durch die schrittweise erfolgende Ermittlung der Differenz bzw. des Unterschiedes der Strahlungsintensität 6', 7' zwischen den meßstellen 8,9 in Richtung der Koordinaten eines über das zu vermessende Gelände 1 gelegten Koordinatensystems läßt sich das gewünschte Strahlungsintensitätsprofil präzise ermitteln.

Der ständige Vergleich der von den beiden Detektoren 2,3 ermittelten Strahlungsintensitätswerte 6', 7' sowie die Differenzbildung dieser Werte wird durch den Computer 4 sehr erleichtert. Durch die gleichzeitige Anzeige auf der Anzeigeeinrichtung 5, welcher der beiden Detektoren 2,3 den höheren bzw. den niedrigeren Wert angibt, kann man die Lage der Reizzonen, beispielsweise Wasseradern, Verwerfungen, Kreuzungen oder dergelichen, einwandfrei und exakt festlegen.

Durch die Differenzbildung der ermittelten Strahlungsintensitätswerte wird gleichzeitig die den beiden Detektoren 2,3 überlagerte vorhandene kosmische Ultrastrahlung rechnungsmäßig ausgeschaltet. Dies ist deswegen von Bedeutung, weil die kosmische Ultrastrahlung über die Zeit schwanken kann. Würde man die Differenzbildung durch Messung mit nur einem Detektor zu verschiedenen Zeiten an verschiedenen Orten vornehmen, erhielte man infolge der zeitlichen Schwankungen der überlagerten kosmischen Ultrastrahlung unterschiedliche Meß-daten, die zu irreführenden Schlußfolgerungen über die tatsätlich vorhandenen Strahlungsverhältnisse über einem bestimmten Gelände oder in einem bestimmten Gebäude fähren können.

Die in der DE-OS 30 03 958 dargelegten Intensitätsunterschiede der radioaktiven Erdstrahlung wurden mit zwei gleichartigen Meßvorrichtungen, beispielsweise mit Hilfe des Szintomats-6134 ® der Firma Automess, Ladenburg, ermittelt. Hierbei war die eine Meßvorrichtung auf einer Stör- oder Reizzone aufgestellt worden, während die andere Meßvorrichtung auf einem reizzonen-neutralen Ort errichtet wurde. Durch Differenzbildung ergab sich, daß die Strahlungsintensität über der Reizzone geringer war, als über dem neutralen Gebiet.

Würde man beispielsweise ein Gerät schaffen, bei dem an einem gitterförmig ausgebildeten und etwa 50 x 50 cm groß bemessenen Rahmen 100 radioaktive Meßgeräte rasterartig angeordnet sind, so könnte man eine Gebäuds- oder Geländefläche der Größe von 50 x 50 cm innarhalb von 5 Minuten vermessen. Außerdem würden durch das gleichzeitige Messen mit mehreren Meßgeräten die zeitlichen Schwankungen der radioaktiven Strahlung, die die Strahlungswerts an den einzelnen Meßpunkten unter dem Einfluß insbesondere der kosmischen Strahlung mitunter stark verzerren, mit berücksichtigt.

Zu einer ersten Ermittlung der Verteilung der Strahlungs-Intensität über einer Gebäude- oder Geländefläche erweist sich eine Meßzeit von etwa 5 Minuten für eine grobe Beurteilung als ausreichend. Für eine exaktere Messung ist eine längere Meßzeit von 10 bis 20 Minuten zweckmäßig. Trägt man die - sozusagen in einer Momentaufnahme nach Ablauf dieser 5 Minuten - ermittelten Meßdaten entweder manuell oder automatisch auf einer die Meßfläche darstellenden Meßkarte auf, so erhält man das Profil der Strahlungs-Intensität des gemessenen Fläche, aus dem man möglicherweise sehr wichtige Schlüsse über die Bodenbeschaffenheit unterhalb der Meßfläche ziehen kann (Verlauf unterirdischer Wasseradern, Bodenverwerfungen, Gesteinsformationen u. dgl.).

Man kann die Meßapparatur so auslegen, daß die Radioaktivität von den Detektoren laufend weiter gemessen wird, auch wenn ihre Digital- oder Analoganzeige scheinbaren Stillstand signalisieren. Die Zählung der radioaktiven Impulse wird mittels entsprechender Speicher festgehalten, so daß auch diese Meßwerte später ausgewertet werden können. Durch länger bemessene Meßzeiten kann die Meßgenauigkeit entsprechend erhöht werden.

Das Meßraster der Meßanlage kann natürlich insgesamt so verändert werden, daß es ein Optimum im Zielkonflikt zwischen der gebotenen Wirtschaftlichkeit einerseits und der geforderten Meßgenauigkeit andererseits darstellt. Im freien Gelände, dessen Untergrund zunächst nur in groben Zügen untersucht werden soll, wird ein Rahmen von 200 x 200 cm mit 400 Meßpunkten wirschaftlicher einsetzbar sein, als ein Rahmen von 50 x 50 cm mit 100 Meßpunkten, auch wenn dadurch die Meßgenauigkeit beeinträchtigt ist. Bei vorstehendem Beispiel ergibt sich bei Verwendung des größeren Rahmens eine Zeitersparnis von über 90 % im Vergleich zum kleineren Rahmen, sofern die gleiche Fläche vermessen werden soll.

Bei Vermessung größerer Flächen werden die Messungen zeitlich nacheinander und kontinuierlich über die Fläche fortschreitend durchgeführt. Die dabei gewonnenen Meßwerte werden danach entsprechend zusammengesetzt, um so ein lückenloses Profil des Strahlungsfeldes dieser Fläche zu erhalten. Dieses Profil ist natürlich widerum mit dem Fehler behaftet, daß sich die über einem Meßfeld der Gesamtfläche ermittelten Meßdaten infolge der vorstehend schon erwähnten kosmischen Strahlung gegenüber den Meßdaten des Nachbar-Meßfeldes während der Vermessung der Gesamtfläche quantitativ verändern können, was zu einer Verfälschung des Gesamtbildes des Strahlungsprofils der Gesamtfläche führen kann. Zur Vermeidung dieses Mangels müßte eben dann ein sehr großes, engmaschiges Netz von Detektoren über der Gesamtfläche angeordnet werden, mittels dessen das Gesamtfeld in einer Momentaufnahme vermeßbar wäre. Das auf diese Weise gewonnene Strahlungsprofil der Gesamtfläche böte natürlich ein Höchstmaß an Genauigkeit und Aussagekraft.

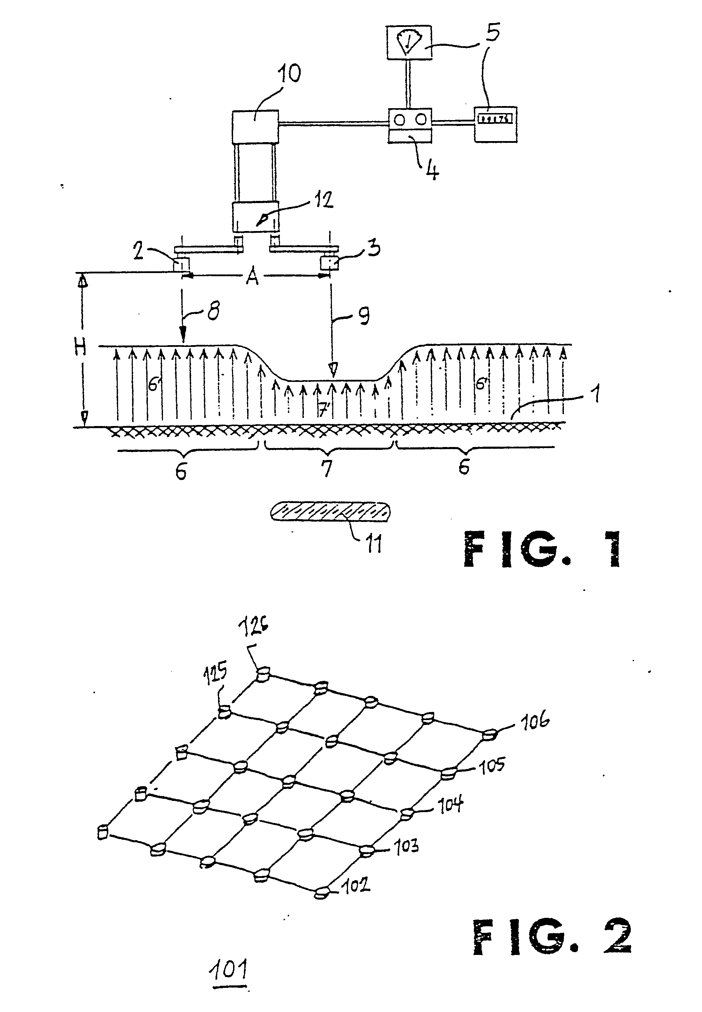

Anhand der Fig. 2 soll die Erfindung auch noch bildlich dargestellt werden. Die Apparatur besteht hier beispielsweise aus einer rasterartigen Anordnung von etwa 25 Detektoren 102 bis 126, die zur Vermessung einer Fläche 101 an einem starren Rahmen angebracht sind.

Dabei sind über der zu vermessenden Fläche 101 eine Vielzahl von gleichmäßig oder ungleichmäßig über diese Fläche 101 verteilten, auf radioaktive Strahlung ansprechenden Detektoren 102 bis 126 angeordnet, durch die die an ihren Standorten jeweils vorhandenen momentanen Strahlungs-Intensitäten gleichzeitig meßbar sind, wobei die einzelnen Detektoren 102 bis 126 gleichzeitig in Betrieb gesetzt und gleichzeitig abgeschaltet werden können. Vorteilhafterweise sollten die einzelnen Detektoren 102 bis 126 von einer gemeinsamen Stromquelle versorgt werden, insgesamt transportabel ausgebildet und von einem Taktgeber in wählbaren Intervallen steuerbar sein.

Zur praktischen Nutzbarmachung der Erkenntnisse, die man durch Vermessung eines Geländes und/oder eines Gebäudes mittels der vorstehend beschriebenen Vorrichtungen gewinnen kann, wird gemäß der Erfindung ein Verfahren vorgeschlagen, nach dem man das ermittelte Strahlungsintensitätsprofil nivellieren bzw. die Strahlungsgradienten beseitigen kann. Dabei werden die Bereiche mit niedriger Strahlungsintensität 7' mittels eines radioaktiven Materials in Bezug auf die normale Strahlungsintensität 6' ihres Umfeldes entsprechend nivelliert, und dadurch die vorhandenen Strahlungsgradienten zwischen dem höheren und dem tieferen Strahlungsniveau beseitigt. In der Praxis trägt man dafür Sorge, daß das radioaktive Material in einer Schutzmasse derart Verpackt wird, daß mit diesem bei seiner Handhabung eine direkte körperliche Berührung vermieden und eine Verteilung radioaktiver Partikel in der Luft, in Flüssigkeiten oder am menschlichen, tierischen oder pflanzlichen Körper verhindert wird. Das radioaktive Material könnte gemäß der Erfindung zwischen zwei oder mehreren Platten, insbesondere aus Furnier-, Sperrholz-, Span- oder sogenanntem Dämmaterial, gleichmäßig verteilt auf deren Innenflächen, jeweils durch Haftmittel oder durch Verschweißen, festgehalten werden, wobei die Strahlungsintensität des eingeschlossenen radioaktiven Materials jeweils an der Außenseite der es einschließenden Mittels aufgedruckt wird, um Verwechslungen zu vermeiden.

Schließlich ist gemäß der Erfindung vorgesehen, daß Fasern, Fäden oder Drähte mit radioaktiven Einschlüssen, insbesondere in Gewebeform oder Vliesform, verwendet werden, die durch Ummantelung, Umspinnung, Umspritzung oder Tauchen derart umschlossen sind, daß eine direkte Berührung des radioaktiven Materials verhindert wird.

**Bezugszeichenliste:**

1 zu vermessende Erdbodenfläche
2 Detektor
3 Detektor
4 Recheneinheit, Computer
5 Anzeigeeinrichtung (digital oder analog)
6 Bereich höherer Strahlungsintensität
6' Strahlungsintensität (höherer Wert, an Meßstelle 8)
7 Bereich niedrigerer Strahlungsintensitat
7' Strahlungsintensität (niedrigerer Wert, an Meßstelle 9)
8 Meßstelle
9 Meßstelle
10 Empfangseinrichtung
11 Wasserader (unter 1)
12 Meßvorrichtung (mit 2,3)
A = Abstand (zwischen 2,3)
B = Höhe (von 2,3 über 1)
101 zu vermessende Erdbodenfläche
102 bis 126 Detektoren

**Patentansprüche:**

1. Vorrichtung zur Messung von vom Erdboden abstrahlender radioaktiver Strahlung zur Ermittlung des/der dort vorhandenen Strahlungsintensitätsgradienten, gekennzeichnet durch mindestens zwei nebeneinander im Abstand (A) voneinander und über dem zu messenden Erdboden (1) etwa in gleicher Höhe (H) angeordnete Detektoren (2,3), deren Meßwertdifferenzen entweder von Hand ermittelt werden oder die an eine Recheneinheit (4) angeschlossen und über diese derart miteinander kombiniert sind, daß eine von der Recheneinheit (4) gesteuerte Anzeigeeinrichtung (5) jeweilsdie Differenz bzw. den Unterschied der Strahlungsintensi-täten (6',7') der Bereiche (6,7) zwischen den Meßstellen (8,9) anzeigt, über denen sich die Detektoren (2,3) gerade befinden.

2. Vorrichtung nach Anspruch 1, dadurch gekennzeichnet, daß zwei Detektoren (2,3) vorgesehen sind, deren Meßdaten in einem geeigneten Takt abwechselnd einer zentralen Empfangseinrichtung (10) zuführbar sind.

3. Vorrichtung nach Anspruch 1 oder 2, dadurch gekennzeichnet, daß die Recheneinheit (4) ein Computer ist, der derart programmiert ist, daß er denjenigen der beiden Detektoren (2,3) anzeigt, der den höheren Wert (6) an Strahlungsintensität ermittelt.

4. Vorrichtung nach einem der Ansprüche 1 bis 3, dadurch gekennzeichnet, daß die Detektoren (2,3) gegenüber dem Gelände (1) bewegbar sind, und daß der Abstand (A) zwischen den beiden Detektoren (2,3) veränderbar ist.

5. Vorrichtung nach einem der Ansprüche 1 bis 4, dadurch gekennzeichnet, daß die Anzeigeeinrichtung (5) eine Digital- oder eine Analoganzeigeeinrichtung ist.

6. Vorrichtung nach einem der Ansprüche 1 bis 5, dadurch gekennzeichnet, daß die gemessenen Werte mittels eines Druckers druckbar und/oder mittels einer automatischen Zeicheneinrichtung während des Bewegens der Detektoren (2,3) über die zu vermessenden Zonen hinweg als Kurve darstellbar sind.

7. Vorrichtung nach einem der Ansprüche 1 bis 6, dadurch gekennzeichnet, daß die Detektoren (2,3) handelsübliche Strahlungsmeßvorrichtungen, insbesondere Geiger-Müller-Zähler oder Szintillations-Spektrometer sind.

8. Vorrichtung nach einem der Ansprüche 1 bis 7, dadurch gekennzeichnet, daß durch die Differenzbildung der ermittelten Strahlungsintensitätswerte gleichzeitig die den beiden Detektoren (2,3) überlagerte vorhandene kosmische Ultrastrahlung rech-nungsmäßig ausgeschaltet ist.

9. Vorrichtung nach einem der Ansprüche 1 bis 8, dadurch gekennzeichnet, daß über der zu vermessenden Fläche (101) gleich-mäßig oder ungleichmäßig verteilt eine Vielzahl von auf radioaktive Strahlung ansprechenden Detektoren (102 bis 126...) angeordnet sind, durch die die an ihren Standorten jeweils vorhandenen momentanen Strahlungsintensitäten gleichzeitig meßbar sind, wobei die einzelnen Detektoren (102 bis 126...) gleichzeitig in Betrieb setzbar und gleichzeitig abschaltbar sind.

10. Vorrichtung nach Anspruch 9, dadurch gekennzeichnet, daß die Anzeige der jeweiligen Strahlungsintensität jeweils direkt an der Meß-stelle erfolgt, oder mit gleichzeitiger Angabe der jeweiligen Meß-stelle in einer von diesen entfernten Zentrale zur Auswertung speicherbar ist, insbesondere aufgezeichnet, aufgeschrieben oder aufgedruckt werden kann, wobei während des Stoppens der Anzeige zum Zwecke der Ablesung oder der automatischen Registrierung der Strahlungsintensitäten die Zählung der Strahlungsintensität fortsetzbar und zur späteren Auswertung speicherbar ist.

11. Vorrichtung nach Anspruch 9 oder 10, dadurch gekennzeichnet, daß die einzelnen Detektoren (102 bis 126...) von einer gemeinsamen Stromquelle versorgbar, insgesamt transportabel auzgebildet und von einem Zeittaktgeber in wählbaren Intervallen steuerbar sind.

12. Verfahren zur Nivellierung des/der Strahlungsintensitätsgradienten, der/die durch eine Vorrichtung zur Messung von vom Erdboden abstrahlender radioaktiver Strahlung nach einem der Ansprüche 1 bis 11 ermittelt wird/werden, dadurch gekennzeichnet, daß mindestens zwei nebeneinander in Abstand voneinander und über dem zu messenden Erdboden etwa in gleicher Höhe angeordnete und an eine Recheneinheit angeschlossene Detektoren verwendet werden,

daß diese Detektoren über die Recheneinheit derart miteinander kombiniert sind, daß eine von der Recheneinheit gesteuerte Anzeigeeinrichtung jeweils die Differenz bzw. und Unterschied der Strahlungsintensitäten der Bereiche zwischen Meßstellen anzeigt, über denen sich die Detektoren gerade befinden, und

daß die niedrigen Strahlungsintensitätswerte von Bereichen mit niedriger Strahlungsintensität mittels eines radioaktiven Materials in Bezug auf den normalen Strahlungsintensitätswert nivelliert werden, und dadurch der/die vorhandene(n) Strahlungsintensitätsgradient(en) zwischen den Bereichen unterschiedlicher Strahlungsintensität beseitigt wird/werden.

13. Verfahren nach Anspruch 12, dadurch gekennzeichnet, daß das radioaktive Material in einer Schutzmasse derart verpackt wird, daß mit diesem bei seiner Handhabung eine direkte körperliche Berührung vermieden und eine Verteilung radioaktiver Partikel in der Luft, in Flüssigkeiten oder am menschlichen, tierischen oder pflanzlichen Körper verhindert wird.

14. Verfahren nach Anspruch 12 oder 13, dadurch gekennzeichnet, daß das radioaktive Material zwischen zwei oder mehreren Folien oder Platten, insbesondere aus Furnier-, Sperrholz-, Span- oder sogenanntem Dämmaterial, gleichmäßig verteilt auf deren Innenflächen, jeweils durch Haftmittel oder durch Ver-schweißen, festgehalten wird, wobei die Strahlungsintensität des eingeschlossenen radioaktiven Materials jeweils an der Außenseite der es einschließenden Mittels aufgedruckt wird.

15. Verfahren nach einem der Ansprüche 12 bis 14, dadurch gekennzeichnet, daß Fasern, Fäden oder Drähte mit radioaktiven Einschlüssen, insbesondere in Gewebeform oder Vliesform, verwendet werden, die durch Ummantelung, Umspinnung, Umspritzung oder Tauchen derart umschlossen sind, daß eine direkte Berührung des radioaktiven Materials verhindert wird.

**Claims**

1. Apparatus for the measurement of radioactive radiation irradiated from the earth for the detection of the radiation intensity gradient(s) which is/are present there, characterized by at least two detectors(2,3) next to each other and spaced from each other at a spacing (A) which are disposed above the ground (1) to be measured at approximately the same height (H), whose measured value differences are detected either by hand or are connected to a computer unit (4) and by means of the latter are combined so that a display device (5) which is controlled by said computer unit (4) displays respectively the difference or the variation of the radiation intensity gradients (6',7') between the measuring points (8,9),above which the detectors (2,3) are arranged in upright manner.

2. Apparatus according to claim 1, characterized in that two detectors (2,3) are provided,whose measurement data can be alternately supplied with suitable timing to a central receiving device (10).

3. Apparatus as in the claims 1 or 2, characterized in that the computing unit (4) is a computer which is programmed so that it displays the detector out of the two detectors which detects the higer value (6) of radiation intensity.

4. Apparatus according to one of the claims 1 to 3,charact-erized in that the detectors (2,3) are movable against the terrain (1) and in that the spacing (A) between the two detectors (2,3) can be altered.

5. Apparatus according to one of the claims 1 to 4, characterized in that the display device (5) is a digital or an analog display device.

6. Apparatus as in one of the claims 1 to 5, characterized in that the measured values can be shown by a printer and/or by an automatic marking device during the motion of the detectors (2, 3) above the zones to be surveyed as a curve.

7. Apparatus according to one of the claims 1 to 6, characterized in that the detectors (2,3) are the normal radiation measuring devices obtainable in the trade,especially Geiger-Müller counters or scintillation spectrometers.

8. Apparatus according to one of the claims 1 to 7, characterized in that by means of the difference formation of the radiation intensity values which are detected, at the same time the cosmic ultra-radiation which is present superimposed on the two detectors is eliminated.

9. Apparatus according to one of the claims 1 to 8, characterized in that above the surface to be measured a plurality of detectors which respond (102 to 126...) to radioactive radiation is arranged evenly or unevenly, by which means the radiation intensities momentarily present at their respective locations can be simultaneously measured, while the individual detectors (102 to 126...) can be started up simultaneously and can be switched off simultaneously.

10. Apparatus according to claim 9, characterized in that the display of the respective radiation intensity is performed directly at the point of measurement respectively, or can be stored with simultaneous indication of the respective measuring point in a central unit which is remote from said measuring point for evaluation,and especially can be recorded, written out or printed out, in which during the stoppage of the display for the purpose of readout or of automatic registration of the radiation inetnsities,the counting of the radiation intensity can be continued and can be stored for evaluation later.

11. Apparatus according to claims 9 or 10, characterized in that the individual detectors (102 to 126...) can be supplied from a joint source of current, are designed to be wholly transportable and can be controlled from a timing generator at selectable intervals.

12. Process for levelling the radiation intensity gradient(s) which is or are detected by an apparatus for the measurement of radioactive radiation emitted from the earth according to one of the claims 1 to 11,

characterized in that

at least two detectors are used adjacent to each other and spaced from each other and are arranged above the ground to be measured at about the same height and are connected to a computing unit,

in that these detectors are combined with each other via the computing unit so that a display device controlled by the computing unit respectively shows the difference or the variation of the radiation intensities of the areas between the measuring points, above which the detectors are located in upright manner, and

in that the low radiation intensity values from areas with low radiation intensity are levelled by means of a radioactive material with respect to the normal radiation intensity value, and in that the existing radiation intensity gradient(s) is or are removed between the areas of different radiation intensity.

13. Process according to claim 12, characterized in that the radioactive material is packed in a protective substance so that thereby in its treatment any direct physical contact is avoided and a distribution of radioactive particles in the atmosphere, liquids or in the human, animal or vegebtable bodies is prevented.

14. Process according to claims 12 or 13, characterized in that said radioactive material is held firmly between two or more sheets or plates, especially made of veneer, plywood, shavings or so-called insulating material, evenly distributed on their inner surfaces respectively by adhesives or by welding, whereby the radiation intensity of the enclosed radioactive material is respectively printed on the exterior of the medium which encloses it.

15. Process according to one of the claims 12 to 14, characterized in that fibres, yarns or wires with radioactive enclosures, especially in the fabric or non-woven form, are used which are surrounded by sheathing, spinning, injection or immersion so that any direct contact with the radioactive material is prevented.

**Revendications**

1. Installation pour la mesure du rayonnement radioactif du sol en vue de déterminer les gradients d'intensité de ce rayonnement

caractérisée par

au minimum deux détecteurs (2,3) disposés au-dessus du sol (1) approximativement à la même hauteur (H) et distants l'un de l'autre de A, les différences entre les valeurs mesurées par ces détecteurs étant déterminées soit manuellement soit par une unité de calcul (4) à laquelle sont raccordés les détecteurs et par l'intermédiaire de laquelle ils sont combinés entre eux de telle sorte qu'un dispositif indicateur (5) commandé par l'unité de calcul (4) affiche la différence des intensités de rayonnement (6',7') des zones (6,7) situées entre les points de mesure (8,9) au-dessus desquels se trouvent les détecteurs (2,3).

2. Installation selon la revendication 1, caractérisée en ce que sont prévus deux détecteurs (2,3) dont les mesures peuvent être transmises alternativement, suivant une cadence appropriée, à un dispositif de réception central (10).

3. Installation selon la revendication 1 ou 2, caractérisée en ce que l'unité de calcul (4) est un ordinateur programmé de telle sorte qu'il indique celui des deux détecteurs (2,3) qui mesure l'intensité de rayonnement supérieure (6).

4. Installation selon l'une des revendications de 1 à 3, caractérisée en ce que les détecteurs (2,3) sont mobiles par rapport au terrain (1) et que l'écart A entre les deux détecteurs peut être varié.

5. Installation selon l'une des revendications dé la à 4, caractérisée en ce que le dispositif indicateur (5) est un dispositif indicateur analogique ou un dispositif indicateur numérique.

6. Installation selon l'une des revendications de 1 à 5, caractérisée en ce que les valeurs mesurées peuvent être imprimées à l'aide d'un imprimante et/ou, au moyen d'un dispositif traceur automatique, représentés sous forme de courbe pendant le déplacement des détecteurs (2,3) au-dessus des zones à mesurer.

7. Installation selon l'une des revendications de 1 à 6, caractérisée en ce que les détecteurs (2,3) sont des instruments de mesure du rayonnement couramment fournis par le commerce, en particulier des compteurs Geiger-Mùller ou des spectromètres à scintillation.

6. Installation selon l'une des revendications de 1 à 7, caractérisée en ce que par suite de la soustration des valeurs de l'intensité du rayonnement mesurées, le rayonnement cosmique superposé dans les mesures des deux détecteurs est mathématiquement éliminé.

9. Installation selon l'une des revendications de 1 à 8, caractérisée en ce que sont disposés régulièrement ou irrégulièrement au-dessus de la surface à mesurer (101) une multitude de détecteurs sensibles au rayonnement radio-actif (102 à 126...) permettant de mesurer simultanément à leur emplacement respectif l'intensité actuelle du rayonnement radioactif, les différents détecteurs (102 à 126..) pouvant être simultanément mis en service et hors service.

10. Installation selon la revendication 9,
caractérisée en ce que
l'intensité du rayonnement respective est affichée directement au point de mesure, ou bien, avec indication parallèle du point de mesure concerné, peut être stockée, et en particulier enregistrée, écrite ou imprimée dans une centrale distante des points de mesure, la mesure de l'intensité de rayonnement pouvant être poursuivie et stockée en vue d'une exploitation ultérieure pendant l'arrêt de l'indication pour lecture de l'affichage ou pour l'enregistrement automatique des intensités de rayonnement.

11. Installation selon la revendication 9 ou 10, caractérisée en ce que
les différents détecteurs (102 à 126...) peuvent être alimentés par une source de tension commune, sont mobiles dans leur ensemble et peuvent être commandés par une horloge en intervalles sélectionnables.

12. Procédé pour niveler le/les gradient(s) d'intensité du rayonnement déterminé(s) par l'installation pour la mesure du rayonnement radioactif du sol selon l'une des revendications 1 à 11
caractérisé en ce que
sont utilisés au minimum deux détecteurs disposés audessus du sol approximativement à la même hauteur distants l'un de l'autre et raccordés à une unité de calcul,
que ces détecteurs sont combinés entre eux par l'intermédiaire de l'unité de calcul de telle sorte qu'un dispositif indicateur commandé par l'unité de calcul affiche la différence des intensités de rayonnement des zones situées entre les points de mesure au-dessus desquels se trouvent les détecteurs et que les valeurs d'intensité du rayonnement basses provenant de zones à basse intensité de rayonnement sont nivelées par rapport à la valeur normale de l'intensité du rayonnement à l'aide d'un matériau radioactif de manière à supprimer le(s) gradient(s) d'intensité entre les zones de différentes intensités de rayonnement.

13. Installation selon la revendication 12, caractérisée en ce que
les matériaux radioactifs sont emballés dans une masse protectrice de telle façon à éviter pendant leur manutention un contact direct avec le corps humain ainsi qu'une dispersion de particules radioactives dans l'air, les liquides ou sur les corps d'êtres humains, d'animaux ou de plantes.

14. Installation selon la revendication 12 ou 13, caractérisée en ce que
les matériaux radioactifs sont fixés à l'aide de moyens adhésifs ou bien soudés sur les surfaces intérieures de deux ou plusieurs feuilles ou panneaux, en particulier de contreplaqué, d'aggloméré ou de matériau isolant, sur lesquelles ils ont été répartis de façon régulière, l'intensité du rayonnement du matériau radioactif enfermé étant respectivement indiquée par impression sur la face extérieure des moyens d'emballage.

15. Installation selon l'une des revendications de 12 à 14,
caractérisée en ce que
sont utilisés des fibres et fils à inclusions radioactives, en particulier sous forme de tissus ou de toisons capsulées par gainage, tressage, couverture en extrusion ou par trempage de telle sorte qu'un contact direct avec le matériau radioactif est évité.

**FIG. 1**

**FIG. 2**

101